# EUROPÄISCHE PATENTSCHRIFT

(11) **EP 2 246 174 B1**
(45) Veröffentlichungstag und Bekanntmachung des Hinweises auf die Patenterteilung: **05.06.2013**
(21) Anmeldenummer: 10160806.5
(22) Anmeldetag: 22.04.2010
(51) Int. Cl.: B29C 47/68

(54) **Filtereinrichtung für Kunststoffschmelzen**
Filter device for plastic melts
Dispositif de filtre pour matières plastiques en fusion

(30) Priorität: 24.04.2009 DE 102009002648; 09.07.2009 DE 102009032652
(43) Veröffentlichungstag der Anmeldung: 03.11.2010
(73) Patentinhaber: Kreyenborg Verwaltungen und Beteiligungen GmbH & Co. KG, D-48157 Münster (DE)
(72) Erfinder: Hartmann, Frank, 48565, Steinfurt (DE); Andress, Michael, 48341, Altenberge (DE)
(74) Vertreter: Tarvenkorn, Oliver

(56) Entgegenhaltungen:
- WO-A2-02/06028
- JP-A- 10 244 576
- US-A- 5 200 077
- US-A- 5 462 653
- US-A- 5 958 255

## Beschreibung

Die Erfindung betrifft eine Filtereinrichtung für Kunststoffschmelzen mit wenigstens einem, zwischen einem Eintrittskanal und einem Austrittskanal eines Gehäuses verschiebbar in einer Siebbolzenbohrung angeordneten Siebbolzen, der auswechselbare, dreidimensionale Filterelemente enthält, wobei das Innere der Filterelemente mit wenigstens einem im Siebbolzen ausgebildeten Schmelzekanal in Verbindung steht, der in der Produktionsstellung mit dem Ein- oder Austrittskanal des Gehäuses in Verbindung zu bringen ist, siehe z.B. die WO 02/6028 A2.

Eine solche Filtereinrichtung ist aus der DE 44 20 119 C1 bekannt. Sie hat sich zwar bewährt, allerdings sind dabei Gehäuse und Siebträgerbolzen hinsichtlich der Ein- und Austrittsöffnungen der Schmelzekanäle speziell aufeinander abgestimmt, so dass es nicht möglich ist, wahlweise die ebenfalls bekannten Siebträgerbolzen ins Gehäuse einzusetzen, die quer zur Längsachse angeströmte Siebflächen aufweisen. Insbesondere können Filtereinrichtungen mit solchen Siebträgerbolzen, die quer zur Längsachse angeströmte Siebflächen aufweisen, nicht auf den Betrieb mit einem aus der genannten Patentschrift bekannten Siebträgerbolzen mit Kerzenfiltern umgerüstet werden.

Außerdem hat sich gezeigt, dass die Wartung und Reinigung der bekannten Filtereinrichtung sehr zeitintensiv ist.

Aufgabe der Erfindung ist es daher, eine Filtereinrichtung der eingangs genannten Art so zu verbessern, dass eine leichtere Wartung und Reinigung möglich ist, wobei zugleich aber nach wie vor eine große Filterfläche zur Verfügung gestellt werden soll.

Diese Aufgabe wird durch eine Filtereinrichtung mit den Merkmalen des Anspruchs 1 gelöst.

Die Besonderheit der erfindungsgemäßen Konstruktion besteht verkürzt gesagt darin, einen massiven Siebträgerbolzen teilweise als Rohr auszubilden und den darin geschaffenen Aufnahmeraum mit einer Filterpatrone zu bestücken.

Die Filterpatrone ist dabei aus einer Vielzahl von Kerzenfiltern gebildet, welche an sich bekannt sind. Diese sind an ein gemeinsames Zentralverteilerelement angesetzt und werden von dort gespeist und führen darüber die Schmelze wieder ab.

Die Filterelemente werden bevorzugt von außen nach innen durchströmt. Ein Aufweiten der Filterelemente durch einen zu hohen Differenzdruck zwischen Innen- und Außenseite wird somit vermieden. Jedoch ist bei entsprechender Auslegung der Filterelemente bzw. der Reduzierung der darauf wirkenden Kräfte auch die umgekehrte Strömungsrichtung möglich.

Durch die Verwendung einer Vielzahl von Filterelementen, insbesondere von Kerzenfiltern oder aneinandergesetzten Filterronden, steht eine um ein Vielfaches erhöhte Filterfläche, im Vergleich zu Siebträgerbolzen mit ebenen, flächigen Sieben, zur Verfügung.

Vorteilhaft ist weiterhin, dass eine Durchströmung quer durch den Siebträgerbolzen möglich ist. Die bei den meisten vorhandenen Filtereinrichtungen in der Bohrung diametral gegenüber angeordneten Öffnungen für die Schmelzezu- und -abfuhr können also mit einem nach der Erfindung ausgebildeten Siebträgerbolzen in Verbindung gebracht und durchströmt werden. Es können daher auch bereits vorhandene Filtereinrichtungen mit den erfindungsgemäß ausgebildeten Siebträgerbolzen versehen werden, ohne dass am Gehäuse und den Siebbolzenbohrungen Änderungen vorgenommen werden müssen.

Vorzugsweise sind an beiden Stirnseiten des Zentralverteilerelements Filterelemente angeordnet. Es ergibt sich also ein doppeltes Paket von Filterelementen mit einem scheibenförmigen Zentralverteilerelement in der Mitte. Durch das in der Mitte liegende Zentralverteilerelement wird die nutzbare Filterfläche noch einmal verdoppelt. Der Aufnahmeraum im Siebträgerbolzen wird zugleich in zwei Siebkammern geteilt, die nach einer Reinigung getrennt voneinander entlüftet werden können.

Bei einer bevorzugten Ausführungsform wird die Schmelze über einen im Inneren des Zentralverteilerelements angeordneten ersten Schmelzekanal in einen Aufnahmeraum geleitet und strömt dann von außen durch den Mantel der Kerzenfilter. Die über mehrere Auslassöffnungen aus dem Inneren der jeweiligen Filterelemente abfließende Schmelze wird an einem zweiten Schmelzekanal im Zentralverteilerelement gesammelt und fließt von dort aus dem Siebbolzen ab.

Die Filtereinrichtung kann ohne konstruktive Änderungen auch anders herum durchströmt werden: Dann wird die Schmelze über den zweiten Schmelzekanal auf die Vielzahl von Auslassöffnungen verteilt, an welche sich die Innenseiten der Kerzenfilter bzw. die anderen dreidimensionalen Filterelemente anschließen. Die Schmelze tritt dann durch den Mantel der Filterelemente aus und gelangt in den Aufnahmeraum des Siebträgerbolzens. Von dort fließt die Schmelze über eine weitere Auslassöffnung in den zweiten Schmelzekanal im Zentralverteilerelement und von dort zur Auslassöffnung des Siebträgerbolzens.

Gemäß einer ersten Ausführungsform der Erfindung sind die Filterelemente durch Kerzenfilter gebildet, die sich parallel zur Längsachse des Siebbolzens erstrecken und mit ihrer offenen Seite an Öffnungen an der Stirnseite des Zentralverteilerelements angebracht sind.

Bei einer zweiten und dritten Ausführungsform der Erfindung erstreckt sich in dem Zentralverteilerelement ein zweiter Schmelzekanal bis zu wenigstens einem in den Aufnahmeraum hineinragenden Verteilerrohr mit mehreren Auslassöffnungen, an welches Verteilerrohr sich jeweils wenigstens ein Filterelement anschließt. Das Verteilerrohr ermöglicht zunächst den Fluss der Schmelze auch in der Tiefe des Aufnahmeraums, abgewandt vom Zentralverteilerelement, wobei dann eine gleichmäßige Verteilung auf die entlang des Verteilerrohrs aufgereihten Filterelemente stattfindet. Als Filterelemente werden kurze, radial ausgerichtete Kerzenfilter eingesetzt oder scheibenförmige, hohle Filterronden, die das Verteilerrohr zumindest im Bereich seiner insbesondere radialen Auslassöffnungen umschließen.

Im hinteren Bereich besitzt der Siebträgerbolzen eine äußere glatte Mantelfläche, damit ein Verschluss der Schmelze führenden Kanäle möglich ist. Dies dient dazu, jeweils einen der Siebträgerbolzen aus dem Betrieb herauszunehmen und ihn zu warten, während durch den jeweils anderen Siebträgerbolzen die Filtrierung der Schmelze fortgesetzt wird. Der hintere Bereich kann durch Vollmaterial gebildet sein oder durch ein Rohr.

Vorzugsweise ist das Zentralverteilerelement etwa mittig im Aufnahmeraum angeordnet und teilt diesen in zwei gegeneinander abgedichtete Kammern. Es ist so möglich, zwei Filterpatronen zugleich zum Einsatz zu bringen und die Filterfläche somit zu verdoppeln.

Eine Stange oder ein Rohr, die vom Zentralverteilerelement zum Deckel führt, erleichtert die Entnahme der Filterpatrone aus dem Aufnahmeraum. Zudem wird über die Stange oder das Rohr von dem Deckel Druck auf das Zentralverteilerelement ausgeübt, und dieses wird mit seiner Kante an den Dichtsitz gepresst.

Ist eine hintere Kammer vorhanden, kann auch dort ein Rohr vorgesehen sein, bei dem eine freie Ausströmung der Schmelze am Ende möglich ist.

Die Erfindung wird nachfolgend mit Bezug auf die Zeichnung näher erläutert. Die Figuren zeigen im Einzelnen:
- Fig. 1: eine erste Ausführungsform einer Filtereinrich- tung in perspektivischer Darstellung;
- Fig. 2: einen Siebträgerbolzen gemäß der ersten Ausfüh- rungsform in perspektivischer Darstellung;
- Fig. 3: eine Filterpatrone für den Siebträgerbolzen in perspektivischer Darstellung;
- Fig. 4: den Siebträgerbolzen im Schnitt;
- Fig. 5: eine zweite Ausführungsform einer Filterein- richtung in perspektivischer Darstellung;
- Fig. 6: einen Siebträgerbolzen gemäß der zweiten Aus- führungsform in perspektivischer Darstellung;
- Fig. 7: eine Filterpatrone für den Siebträgerbolzen ge- mäß der zweiten Ausführungsform in perspektivi- scher Darstellung;
- Fig. 8: eine dritte Ausführungsform einer Filterein- richtung in perspektivischer Darstellung;
- Fig. 9: eine Filterpatron für den Siebträgerbolzen ge- mäß der dritten Ausführungsform in perspektivi- scher Darstellung und

- Fig. 10a bis Fig. 10c: eine teilweise geschnittene Filtereinrichtung in Entlüftungs- und Arbeitsstellungen von oben.

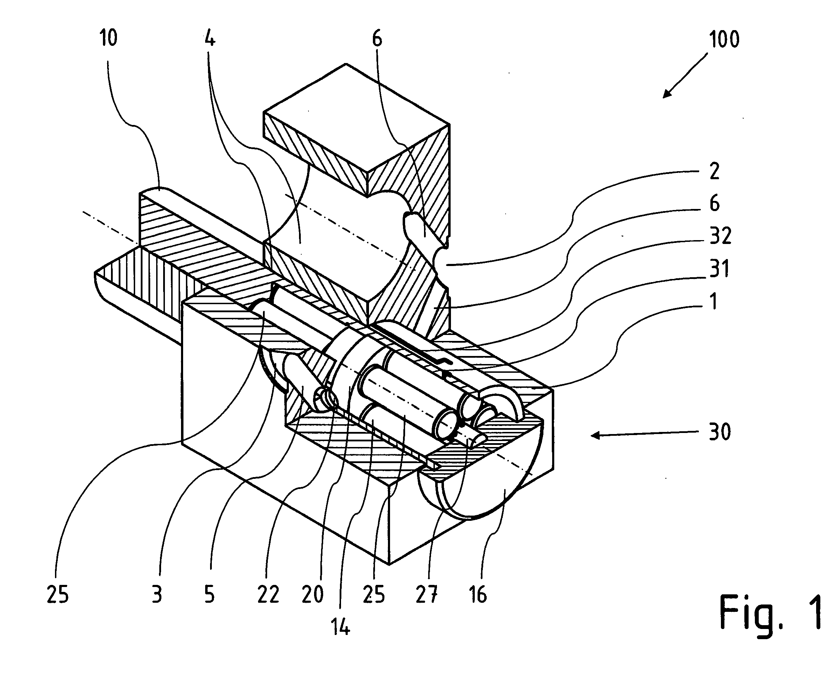

Figur 1 zeigt eine Filtereinrichtung 100, die ein Gehäuse 1 mit zwei Siebträgerbolzenbohrungen 4 aufweist. Die Siebträgerbolzenbohrungen 4 stehen über Kanäle 5, 6 mit Ein- und Austrittsöffnungen 3, 2 in Verbindung.

In seinem inneren Aufnahmeraum 14 enthält der Siebträgerbolzen 10 eine Filterpatrone 30. Zur Außenseite hin ist der Aufnahmeraum 14 durch einen stirnseitig angeordneten Deckel 16 abgeschlossen. Im hinteren Bereich besitzt der Siebträgerbolzen 10 eine äußere, glatte Mantelfläche, damit ein Verschluss der Schmelze führenden Kanäle 5, 6 möglich ist.

Es reicht aus, den Deckel 16 von dem Siebträgerbolzen 10 zu entfernen, um eine darin eingesetzte Filterpatrone 30 nach vorn herausziehen zu können. Von der Vorderseite des Gehäuses 1 her ist dann der innere, leere Aufnahmeraum 14 des Siebträgerbolzens für eine Reinigung zugänglich. Während ein herkömmlicher Siebträgerbolzen mit quer durchströmten, flächigen Siebplatten zur Wartung weit herausgezogen werden muss, damit die Siebstelle überhaupt zugänglich ist, braucht der erfindungsgemäß ausgebildete Siebträgerbolzen nur wenige Zentimeter vorgezogen oder verdreht zu werden. Diese Bewegung ist allein notwendig, um den Verschluss der Kanäle 5, 6 zu bewirken. Ein weiteres Herausziehen des Siebträgerbolzens 10 zu Wartungszwecken ist hingegen nicht erforderlich. Damit wird auch seitlich neben der Filtereinrichtung 100 Platz gespart, der bei bekannten Filtereinrichtungen freigehalten werden müsste, um die Siebträgerbolzen für die Reinigung weit genug herausziehen zu können.

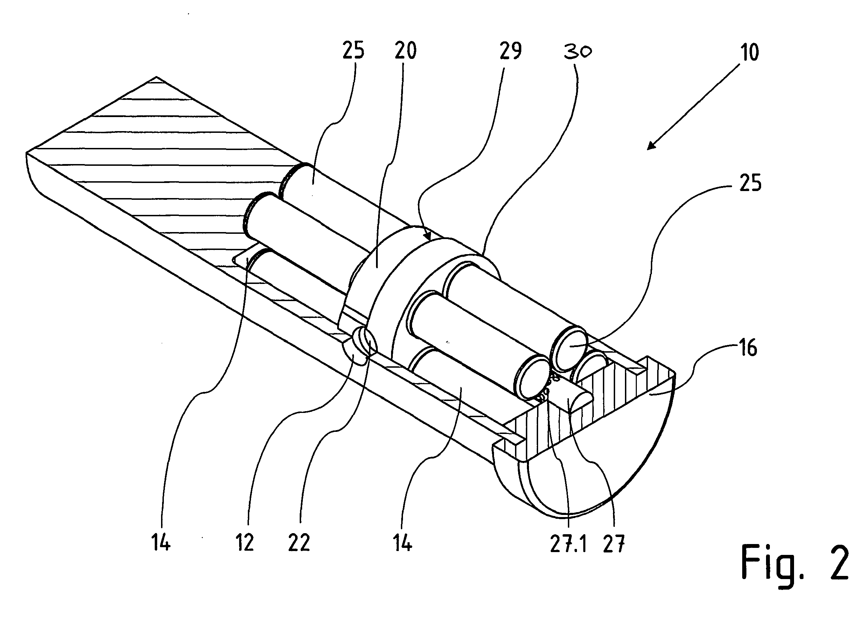

Figur 2 zeigt den aus dem Gehäuse 1 entfernten Siebträgerbolzen 10 im Halbschnitt, so dass die in dem Aufnahmeraum 14 enthaltene Filterpatrone 30 sichtbar ist.

Die auswechselbare Filterpatrone 30 besteht im Wesentlichen aus einem Zentralverteilerelement 20 und daran angesetzten Filterelementen 25.

In Figur 2 links ist die Einströmöffnung 12 im Zentralverteilerelement 20 erkennbar, welche über einen ersten Schmelzekanal 22 mit einer Auslassöffnung 23 in Verbindung steht, so dass für den Fluss der Schmelze ein direkter Weg durch das Zentralverteilerelement 20 hindurch und in den Aufnahmeraum 14 hinein besteht.

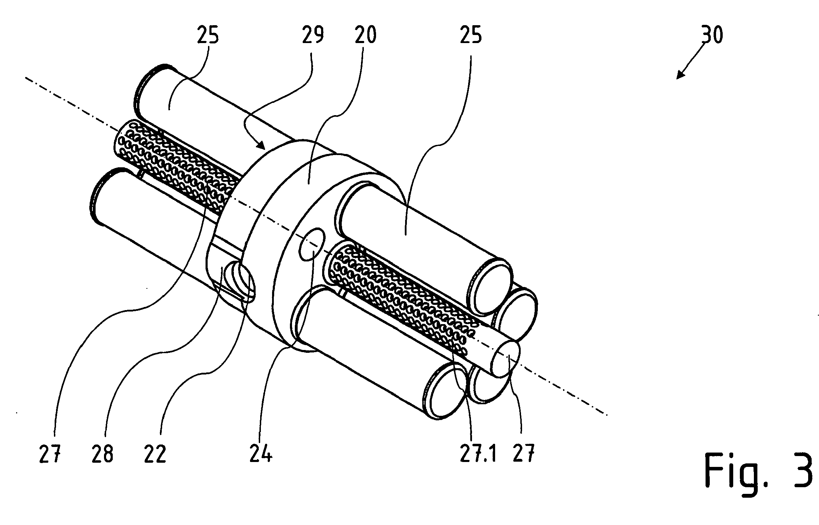

Figur 3 zeigt die aus dem Siebträgerbolzen 10 entnommene Filterpatrone 30, die gemäß der hier gezeigten ersten Ausführungsform aus dem zentralen, scheibenförmigen Zentralverteilerelement 20 und mehreren stirnseitig darin eingeschraubten Kerzenfiltern 25 besteht. Die Kerzenfilter 25 erstrecken sich bei dieser Ausführungsform zu beiden Seiten des Zentralverteilerelements 20. Das Zentralverteilerelement 20 teilt somit auch den Aufnahmeraum 14 im Siebträgerbolzen 10 in zwei separate Kammern.

Eine Anlagekante 29 des Zentralverteilerelements liegt an einem entsprechenden Absatz am Innenmantel des Aufnahmeraum 14 an und ermöglicht so die dichte Trennung des Aufnahmeraums in eine vor und eine hinter dem Zentralverteilerelement 20 liegende Kammer. Außerdem legt sie die axiale Position der Filterpatrone 30 fest.

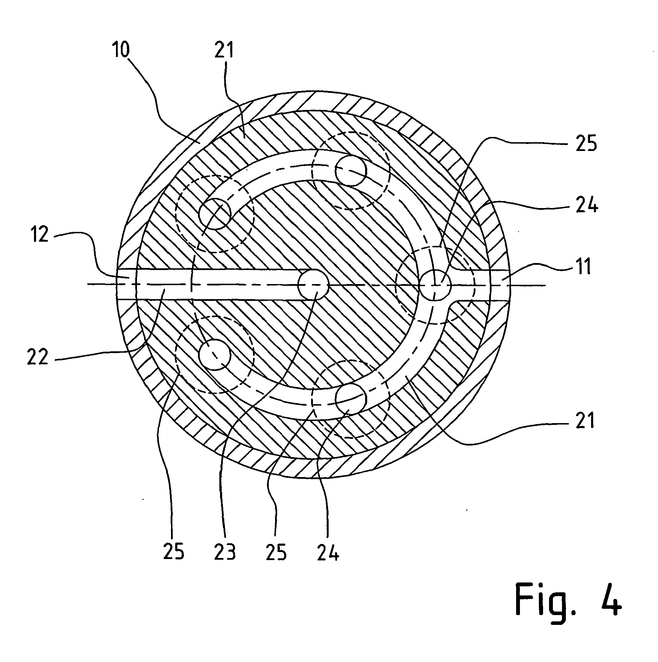

Die Abdichtung der Kammern untereinander ist erforderlich, um einen Übertritt von Schmelze in die Austrittsöffnung 11 (vgl. Fig. 4) im Mantel des Siebträgerbolzens 10 zu vermeiden. An dieser Stelle könnte sonst eine Vermischung von filtriertem mit unfiltriertem Material stattfinden.

Ein Vorsprung 28 greift in eine kompatible Ausnehmung innen im Aufnahmeraum 14 ein, so dass die Filterpatrone 30 verdrehsicher festgelegt ist und sichergestellt ist, dass die Öffnungen 11, 12 (vgl. auch Fig. 4) im Siebträgerbolzen 10 in Deckung mit den Mündungen der Schmelzekanäle im Zentralverteilerelement 20 liegen.

Verteilerrohre 27, die sich vom Zentralverteilerelement 20 in den Aufnahmeraum erstrecken, bewirken eine gleichmäßige Schmelzeströmung in der Tiefe des Aufnahmeraums. Hierzu sind radiale Auslassöffnungen 27.1 vorgesehen.

Das zum Deckel 16 gewandte Verteilerrohr 27 erleichtert die Entnahme der Filterpatrone 30 aus dem Aufnahmeraum 14. Zudem wird von dem Deckel 16 über die Stange 27 Druck auf das Zentralverteilerelement 20 ausgeübt, und dieses wird mit seiner Kante 29 an den Dichtsitz gepresst.

Nach dem Abschrauben des Deckels 16 ist der Vorderteil des Verteilerrohrs 27 direkt zugänglich. Um ein Verkanten zu vermeiden, ist das Verteilerrohr 27 zentral inmitten der Kerzenfilter 25 angeordnet, die sich auf einem Teilkreis darum gruppieren. Die Auslassöffnung 23 ist bei dem dargestellten Ausführungsbeispiel im Zentrum des Zentralverteilerelements 20 angeordnet; hieran schließt sich das Verteilerrohr 27 an.

In Fig. 3 ist einer der als Auslassöffnung 24 bezeichneten Plätze für einen Kerzenfilter 25 frei gelassen.

Figur 4 zeigt einen Schnitt durch den Siebträgerbolzen 10 und das Zentralverteilerelement 20. Schmelze, die durch den Kanal 3 im Gehäuse 1 zugeführt wird, gelangt durch eine erste Auslassöffnung 12 im Siebträgerbolzen 10 in einen ersten Schmelzekanal 22 und von dort über die Öffnungen 23 in den Aufnahmeraum 14. Sie tritt durch das poröse Filtermaterial der Kerzenfilter 25, das beispielsweise aus einem Metallgittergeflecht besteht, in die Kerzenfilter 25 ein, die vor den Auslassöffnungen 24 im Zentralverteilerelement 20 angeordnet sind. Von den Auslassöffnungen 24 fließt die Schmelze in den im Querschnitt gesehen spangenförmigen zweiten Schmelzekanal 21, der als Sammler fungiert, welcher die Teil-Schmelzeströme aus den verschiedenen Öffnungen 24 wieder vereinigt. Von dort erfolgt der Abfluss über eine zweite Auslassöffnung 11 aus dem Siebträgerbolzen 10 heraus in den Kanal 6 im Gehäuse 1 und schließlich an der Austrittsöffnung 2 in einen nachgeordneten Prozess.

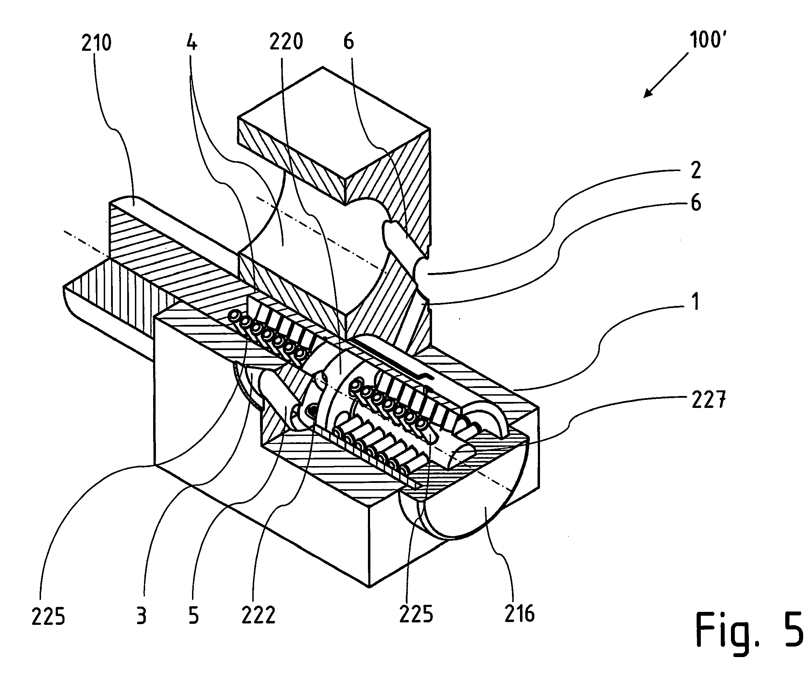

Die Figuren 5 bis 7 und 8 bis 9 zeigen jeweils eine weitere Ausführungsform einer Filtereinrichtung 100' bzw. 100", die sich von der vorstehend beschriebenen Filtereinrichtung 100 allein durch die Ausbildung der inneren Filterpatrone unterscheiden.

In den Figuren 5, 6, und 7 ist ein Siebträgerbolzen 210 mit einer Filterpatrone 230 gezeigt, welche aus einem scheibenförmigen Zentralverteilerelement 220 mit einem Verteilerrohr 227 in der Mitte und an letzterem radial angesetzten Kerzenfiltern 225 besteht.

Im Zentralverteilerelement 220 ist zwischen einer Zulauföffnung 212 und einem Schmelzekanal 222 ein Fließweg ausgebildet, der an einer Auslassöffnung 223 endet. Schmelze tritt dort in die durch das Zentralverteilerelement 220 vom Aufnahmeraum 214 abgetrennte Kammer ein und fließt von dort durch das Filtermaterial der Kerzenfilter 225 über das Rohr 227 in das Zentralverteilerelement 220 zurück, von wo sie durch einen internen Schmelzekanal abgeführt wird.

Die Kerzenfilter 225 sind - bei vergleichbarem Siebbolzendurchmesser - wesentlich kleiner als die sich in Längsrichtung vom Zentralverteilerelement 20 aus erstreckenden Kerzenfilter 25 des ersten Ausführungsbeispiels einer Filterpatrone 30 gemäß den Figuren 1 bis 4.

Bei der zweiten Ausführungsform sind die Kerzenfilter 225 radial auf das - je nach Fließrichtung als Schmelzesammler oder Schmelzeteiler fungierende - zentrale Verteilerrohr 227 aufgesetzt, über welches zudem die Entnahme der Filterpatrone 230 aus dem Siebträgerbolzen 10 nach Abnehmen eines Deckels 227 erleichtert wird.

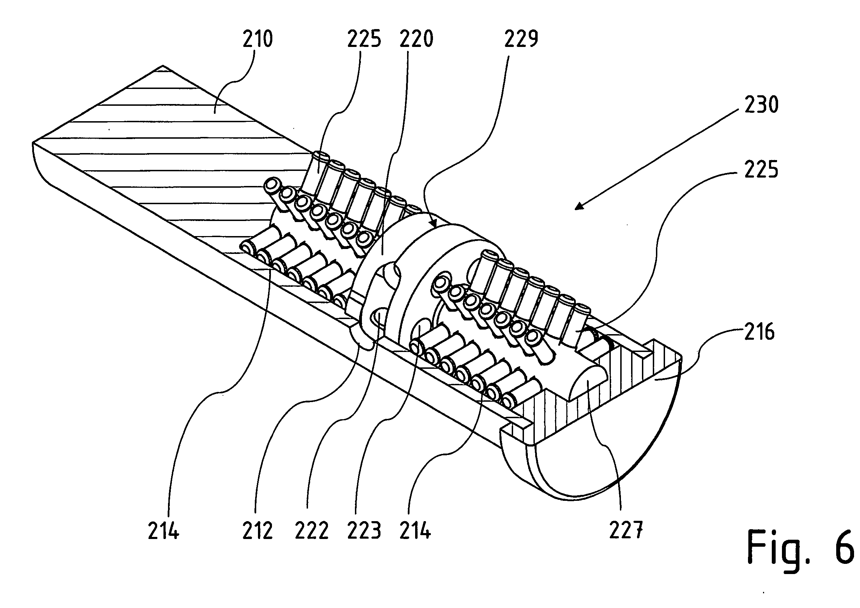

Figur 6 zeigt den Siebträgerbolzen 210 mit der eingesetzten Filterpatrone 230. Durch die Anordnung einer Vielzahl sich radial erstreckender Kerzenfilter 225, noch dazu in mehreren, am Umfang des Rohrs 227 verteilten Reihen, wird eine große Filterfläche bereitgestellt. Diese verdoppelt sich noch dadurch, dass sich eine solche Anordnung von Kerzenfiltern 225 jeweils zu beiden Seiten des Zentralverteilerelements 220 erstreckt.

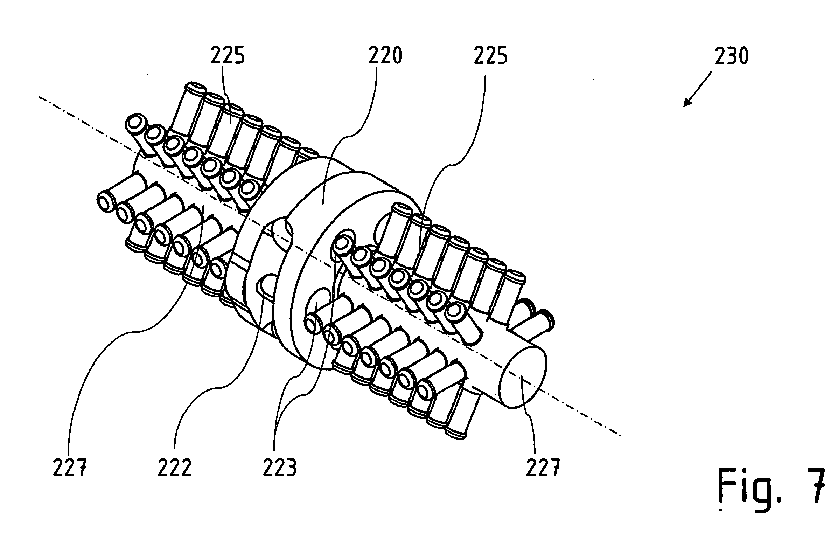

Wie in Fig. 7 erkennbar, erstreckt sich der Schmelzekanal 222 bogenförmig über einen Teil des Umfangs des Zentralverteilerelements 220 und geht dann in mehrere innere Schmelzekanäle über, die jeweils an einer Auslassöffnung 23 münden.

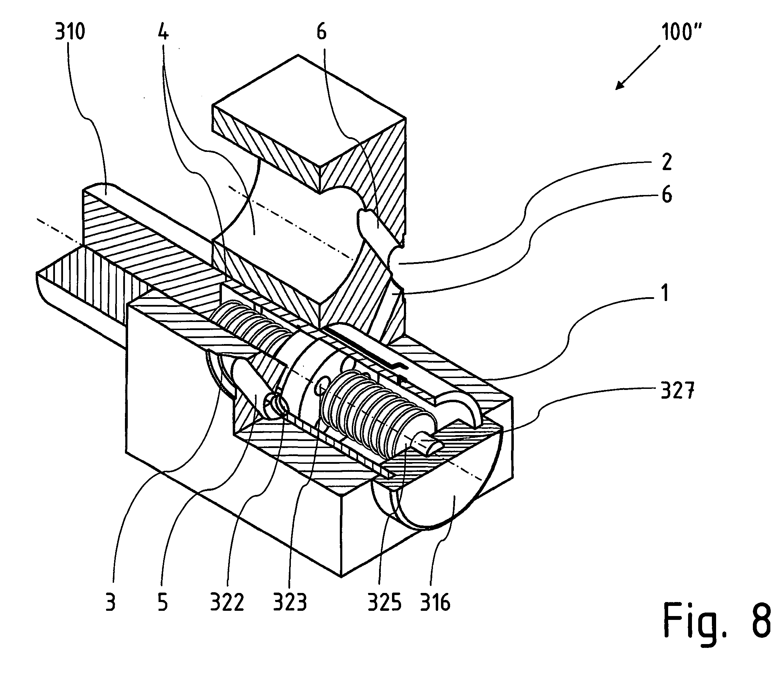

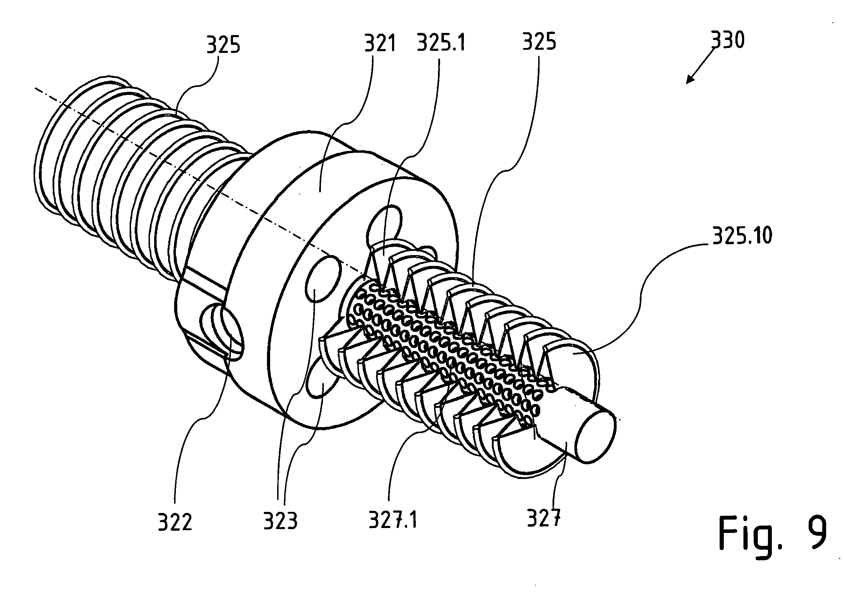

Eine dritte Ausführungsform einer Filtereinrichtung 100" ist in den Figuren 8 und 9 gezeigt. Das Gehäuse 1 mit den Siebträgerbolzenbohrungen 4 ist wieder unverändert gegenüber den zuvor beschrieben Varianten.

Unterschiedlich ist ein Siebträgerbolzen 310 bzw. eine darin enthaltene Filterpatrone 330, welche in Fig. 9 perspektivisch abgebildet ist.

An einem Zentralverteilerelement 320 erfolgt eine Aufteilung der an einer Zulauföffnung 322 einströmenden Schmelze in mehrere Teilströme, die an Auslassöffnungen 323 in den Aufnahmeraum 314 münden. Durch die Anordnung mehrerer Auslassöffnungen 323 um ein zentrales Rohr 327 mit einem Filterelement 325 herum wird eine gleichmäßige Umströmung von allen Seiten erreicht. Das Rohr 327 erstreckt sich bis zu einem Deckel 316.

Das Filterelement 325 besteht hier aus mehreren ringförmigen Filterronden 325.1, 325.2,.... Zumindest die endseitigen Filterronden 325.1,...,325.10 schließen sich mit einem Innenrand dicht an das Rohr 327 an, so dass die durch den Aufnahmeraum 314 strömende Schmelze gezwungen ist, das Filtermaterial zu passieren, bevor sie durch die Öffnungen 327.1 im Rohr 327 wieder ins Zentralverteilerelement 320 abfließt.

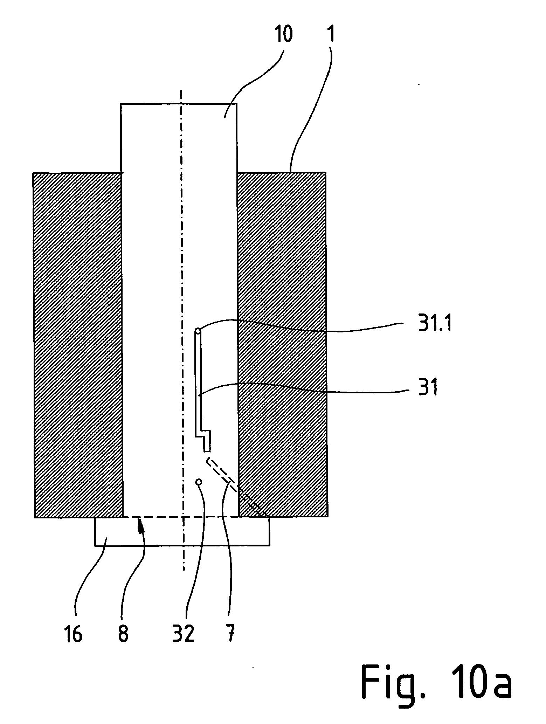

Anhand der Figuren 10a bis 10c wird die Entlüftung und Vorflutung der Kammern im Siebträgerbolzen 10 nach Ende der Reinigung beschrieben.

Fig. 10a zeigt die Arbeitsstellung. Der Siebträgerbolzen 10 befindet sich ganz im Gehäuse. Dabei kann beispielsweise der Deckel 16 an der Gehäusefront anliegen, um eine definierte Stellung zu erreichen.

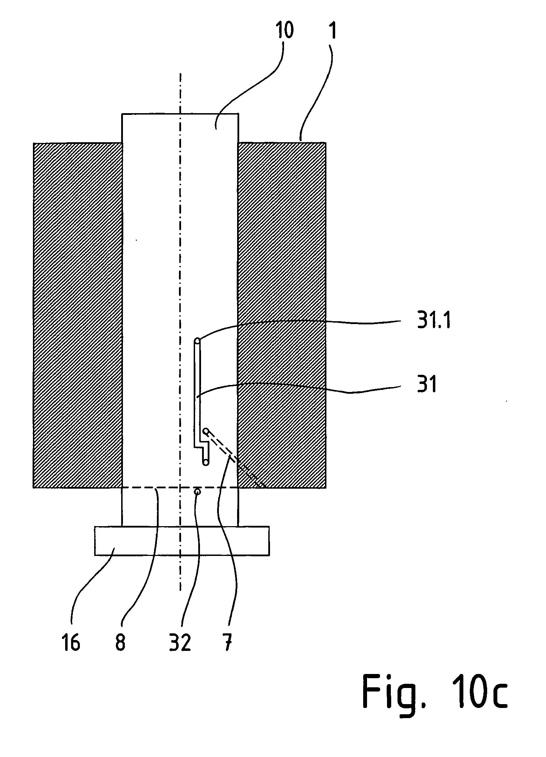

Im vorderen Bereich des Siebträgerbolzens 10, also dem Deckel 16 zugewandt, ist eine Entlüftungsbohrung 32 eingebracht, die mit der vorderen Kammer des Aufnahmeraums 14 in Verbindung steht. Zum Entlüften und Vorfluten des vorderen Teils des Aufnahmeraums 14 im Siebträgerbolzen 10 wird dieser in eine erste Entlüftungsposition gemäß Figur 10c gefahren, und zwar soweit aus dem Gehäuse heraus, dass die Entlüftungsbohrung 32 frei vor einer Kante 8 des Gehäuses liegt. Luft und Schmelze können darüber ins Freie entweichen.

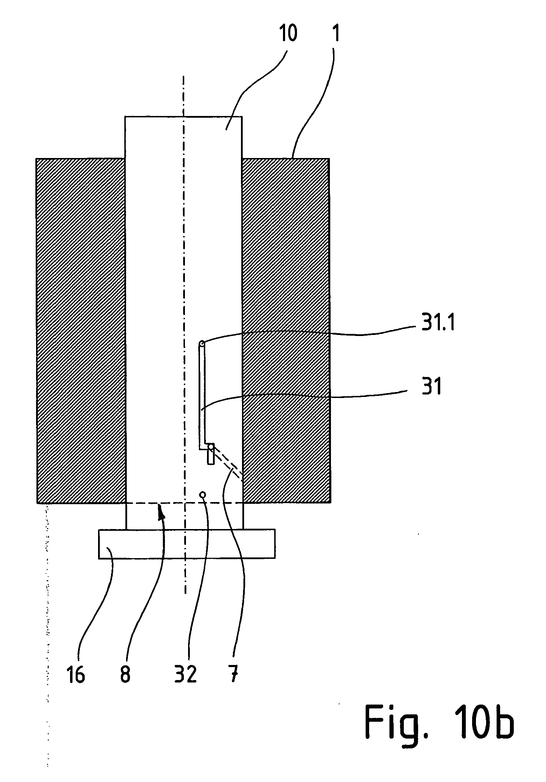

Zum Entlüften und Vorfluten des hinteren Teils des Aufnahmeraums 14 im Siebträgerbolzen 10 ist eine Entlüftungsnut 31 vorgesehen, die sich ausgehend von einer Entlüftungsbohrung 31.1 in axialer Richtung auf der äußeren Mantelfläche bis in die Nähe der Entlüftungsbohrung 32 erstreckt. Durch die Nähe des gewinkelten Endes der Entlüftungsnut 31 zu der Entlüftungsbohrung 32 braucht der Siebträgerbolzen von der Stellung nach Fig. 10a oder der Stellung nach Fig. 10c aus nur wenig axial verschoben werden, um eine zweite Entlüftungsposition gemäß Fig. 10b zu erreichen, in der die Entlüftungsnut 31 eine Mündung einer im Gehäuse 1 eingebrachten Entlüftungsbohrung 7 erreicht.

Über die Entlüftungsbohrung 32 bzw. über die Entlüftungsbohrung 31.1, die Entlüftungsnut 31 und die Entlüftungsbohrung 7 ist ein Schmelzeabfluss aus dem Aufnahmeraum 14 mit stark gemindertem Volumenstrom möglich. Sobald dort Schmelze kontinuierlich ins Freie austritt, ist die Entlüftung und Vorflutung beendet und der Siebträgerbolzen 10 kann wieder in die Arbeitsposition nach Fig. 10a bewegt werden.

## Patentansprüche

1. Filtereinrichtung (100; 100; 100") für Kunststoffschmelzen,
mit wenigstens einem, zwischen einem Eintrittskanal (5) und einem Austrittskanal (6) eines Gehäuses (1) verschiebbar in einer Siebbolzenbohrung (4) angeordneten Siebbolzen (10; 210; 310), der auswechselbare, dreidimensionale Filterelemente (25) enthält,
wobei das Innere der Filterelemente (25, 325) mit wenigstens einem im Siebbolzen (10; 210; 310) ausgebildeten Schmelzekanal (11, 12; 212; 312) in Verbindung steht, der in der Produktionsstellung mit dem Ein- oder Austrittskanal (5, 6) des Gehäuses (1) in Verbindung zu bringen ist,
**dadurch gekennzeichnet, dass** der Siebbolzen (10; 210; 310) wenigstens einen hohlen Aufnahmeraum (14; 214; 314) aufweist, der durch einen teilweise als Rohr ausgebildeten Siebbolzen (10; 210) gebildet ist und der durch einen stirnseitigen Deckel (16; 216; 316) verschließbar ist,
und dass mehrere Filterelemente (25; 225; 325) mit einem Zentralverteilerelement (20; 220; 320) zu einer in den Aufnahmeraum (14; 224; 314) einsetzbaren Filterpatrone (30; 230; 330) gebündelt sind.

2. Filtereinrichtung (100) nach Anspruch 1, **dadurch gekennzeichnet, dass** eine erste Durchgangsöffnung (12) des Siebträgerbolzens (10) über einen ersten Schmelzekanal (12) und eine erste Auslassöffnung (23) im Zentralverteilerelement (20) in den Aufnahmeraum (14) führt und dass sich von einer zweiten Durchgangsöffnung (11) des Siebträgerbolzens (10) in dem Zentralverteilerelement (20) ein zweiter Schmelzekanal (21) bis hin zu mehreren Auslassöffnungen (24) im Zentralverteilerelement (21) erstreckt, vor denen jeweils ein Filterelement (25) angeordnet ist.

3. Filtereinrichtung (100) nach Anspruch 2, **dadurch gekennzeichnet, dass** die Filterelemente durch Kerzenfilter (25) gebildet sind.

4. Filtereinrichtung (100) nach Anspruch 3, **dadurch gekennzeichnet, dass** sich die Kerzenfilter (25) parallel zur Längsachse des Siebbolzens (10) erstrecken und mit ihrer offenen Seite an Öffnungen (24) an einer Stirnseite des Zentralverteilerelements (20) angebracht sind.

5. Filtereinrichtung (100'; 100") nach Anspruch 1, **dadurch gekennzeichnet, dass** eine erste Durchgangsöffnung (212; 312) des Siebträgerbolzens (210; 310) über wenigstens einen ersten Schmelzekanal (222; 322) und wenigstens eine erste Auslassöffnung (23) im Zentralverteilerelement (20) in den Aufnahmeraum (14) führt und dass sich von wenigstens einer zweiten Durchgangsöffnung des Siebträgerbolzens (210; 310) in dem Zentralverteilerelement (220; 320) ein zweiter Schmelzekanal bis zu wenigstens einem in den Aufnahmeraum (214; 314) hineinragenden Verteilerrohr (227; 327) mit mehreren Auslassöffnungen (327.1) übergeht, an welches Verteilerrohr (227; 327) sich jeweils wenigstens ein Filterelement (225; 325) anschließt.

6. Filtereinrichtung (100') nach Anspruch 5, **dadurch gekennzeichnet, dass** die Filterelemente durch Kerzenfilter (225) gebildet sind, die jeweils an eine Auslassöffnung des Verteilerrohrs (227) angesetzt sind.

7. Filtereinrichtung (100') nach Anspruch 6, **dadurch gekennzeichnet, dass** das Verteilerrohr (227) zentral am Zentralverteilerelement (220) angeordnet ist und die Kerzenfilter (225) radial ausgerichtet sind.

8. Filtereinrichtung (100") nach Anspruch 5, **dadurch gekennzeichnet, dass** die Filterelemente durch scheibenförmige, hohle Filterronden (325.1,...,325.10) gebildet sind, die entlang des Verteilerrohrs aufgereiht sind und das Verteilerrohr (327) zumindest im Bereich seiner Auslassöffnungen (327.1) umschließen.

9. Filtereinrichtung (100; 100'; 100") nach wenigstens einem der Ansprüche 1 bis 8, **dadurch gekennzeichnet, dass** an beiden Stirnseiten des Zentralverteilerelements (20; 220; 320) je wenigstens eine Filterpatrone (30; 230; 330) angeordnet ist und das Zentralverteilerelement (20; 220; 320) den Aufnahmeraum (14; 214; 314) in zwei Kammern teilt.

10. Filtereinrichtung (100; 100'; 100") nach wenigstens einem der Ansprüche 1 bis 9, **dadurch gekennzeichnet, dass** die erste Durchgangsöffnung (12) im Siebträgerbolzen (10; 210; 310) über einen ersten Schmelzekanal (22; 222, 322) mit wenigstens einer stirnseitig in dem Zentralverteilerelement (20; 220; 320) eingebrachten Auslassöffnung (23; 223; 323) verbunden ist.

11. Filtereinrichtung (100; 100'; 100") nach wenigstens einem der Ansprüche 1 bis 10, **dadurch gekennzeichnet, dass** sich vom Zentralverteilerelement (21) wenigstens ein Stab oder ein Rohr (27; 227; 327) bis zum Deckel (16; 216; 316) erstreckt.

12. Filtereinrichtung (100; 100'; 100") nach Anspruch 11, **dadurch gekennzeichnet, dass** der Stab oder das Rohr (27; 227; 327) auf der Mittelachse der Filterpatrone (30; 230; 330) angeordnet ist und die Auslassöffnung(en) (23; 223) exzentrisch im Zentralverteilerelement (20; 220; 320) angeordnet ist (sind).

13. Filtereinrichtung (100; 100'; 100") nach wenigstens einem der Ansprüche 1 bis 12, **dadurch gekennzeichnet, dass** am Außenumfang des Zentralverteilerelements (20; 220; 320) und am Innenumfang des Aufnahmeraums (14; 214; 314) formschlüssig ineinander greifende Vor- und Rücksprünge (28) ausgebildet sind.

14. Filtereinrichtung (100; 100'; 100") nach wenigstens einem der Ansprüche 1 bis 12, **dadurch gekennzeichnet, dass** zwischen dem Außenumfang des Zentralverteilerelements (20; 220; 320) und dem Innenumfang des Aufnahmeraums (14; 214; 314) eine Anlagekante (29; 229) ausgebildet ist.

## Claims

1. A filter device (100; 100; 100") for plastic melts, with at least one screen bar (10; 210; 310) which is arranged in a screen bar bore (4) in a displaceable manner between an inlet duct (5) and an outlet duct (6) in a housing (1) and which contains interchangeable three-dimensional filter elements (25), wherein the interior of the filter elements (25, 325) is connected to at least one melt duct (11, 12; 212; 312) which is formed in the screen bar (10; 210; 310) and which is to be connected to the inlet or outlet duct (5, 6) in the housing (1) in the production setting,
**characterized in that** the screen bar (10; 210; 310) has at least one hollow receiving space (14; 214; 314) which is formed by a screen bar (10; 210) designed at least in part in the form of a pipe and which is capable of being closed by a cover (16; 216; 316) on the end face, and a plurality of filter elements (25; 225; 325) are bundled with a central distributor element (20; 220; 320) to form a filter cartridge (30; 230; 330) capable of being inserted into the receiving space (14; 224; 314).

2. A filter device (100) according to claim 1, **characterized in that** a first through-opening (12) in the screen carrier bar (10) leads into the receiving space (14) by way of a first melt duct (12) and a first outlet opening (23) in the central distributor element (20) and a second melt duct (21) extends from a second through-opening (11) in the screen carrier bar (10) in the central distributor element (20) as far as a plurality of outlet openings (24) in the central distributor element (21), in front of which one filter element (25) is arranged in each case.

3. A filter device (100) according to claim 2, **characterized in that** the filter elements are formed by cartridge filters (25).

4. A filter device (100) according to claim 3, **characterized in that** the cartridge filters (25) extend parallel to the longitudinal axis of the screen bar (10) and are attached at their open side to openings (24) on an end face of the central distributor element (20).

5. A filter device (100'; 100") according to claim 1, **characterized in that** a first through-opening (212; 312) in the screen carrier bar (210; 310) leads into the receiving space (14) by way of at least one first melt duct (222; 322) and at least one first outlet opening (23) in the central distributor element (20), and a second melt duct passes from at least one second through-opening in the screen carrier bar (210; 310) in the central distributor element (220; 320) as far as at least one distributor pipe (227; 327) projecting into the receiving space (214; 314) and having a plurality of outlet openings (327.1), the distributor pipe (227; 327) being adjoined by at least one filter element (225; 325) in each case.

6. A filter device (100') according to claim 5, **characterized in that** the filter elements are formed by cartridge filters (225) which are attached to an outlet opening in the distributor pipe (227) in each case.

7. A filter device (100') according to claim 6, **characterized in that** the distributor pipe (227) is arranged centrally on the central distributor element (220) and the cartridge filters (225) are orientated radially.

8. A filter device (100") according to claim 5, **characterized in that** the filter elements are formed by disc-shaped hollow filter blanks (325.1, ..., 325.10) which are lined up along the distributor pipe and surround the distributor pipe (227) at least in the region of the outlet openings (327.1) therein.

9. A filter device (100; 100'; 100") according to at least one of claims 1 to 8, **characterized in that** at least one filter cartridge (30; 230; 330) is arranged in each case on the two end faces of the central distributor element (20; 220; 320), and the central distributor element (20; 220; 320) divides the receiving space (14; 214; 314) into two chambers.

10. A filter device (100; 100'; 100") according to at least one of claims 1 to 9, **characterized in that** the first through-opening (12) in the screen carrier bar (10; 210; 310) is connected by way of a first melt duct (22; 222; 322) to at least one outlet opening (23; 223; 323) formed in the end face of the central distributor element (20; 220; 320).

11. A filter device (100; 100'; 100") according to at least one of claims 1 to 10, **characterized in that** at least one rod or one pipe (27; 227; 327) extends from the central distributor element (21) as far as the cover (16; 216; 316).

12. A filter device (100; 100'; 100") according to claim 11, **characterized in that** the rod or the pipe (27; 227; 327) is situated on the central axis of the filter cartridge (30; 230; 330), and the outlet opening or openings (23; 223) is or are arranged eccentrically in the central distributor element (20; 220; 320).

13. A filter device (100; 100'; 100") according to at least one of claims 1 to 12, **characterized in that** projections and recesses (28) engaging one in the other in a positively locking manner are formed on the external periphery of the central distributor element (20; 220; 320) and on the internal periphery of the receiving space (14; 214; 314).

14. A filter device (100; 100'; 100") according to at least one of claims 1 to 12, **characterized in that** an abutment edge (29; 229) is formed between the external periphery of the central distributor element (20; 220; 320) and the internal periphery of the receiving space (14; 214; 314).

## Revendications

1. Dispositif de filtre (100 ; 100' ; 100") pour des matières plastiques fondues,
comprenant au moins un axe de filtre (10 ; 210 ; 310) disposé de manière à pouvoir être déplacé dans un alésage pour axe de filtre (4) entre un conduit d'entrée (5) et un conduit de sortie (6) d'un boîtier (1), lequel axe de filtre comprend des éléments filtrants (25) échangeables, tridimensionnels, sachant que l'intérieur des éléments filtrants (25, 325) est en liaison avec au moins un conduit de coulée (11, 12 ; 212 ; 312) réalisé dans l'axe de filtre (10 ; 210 ; 310), lequel conduit de coulée doit être amené en liaison en position de production avec le conduit d'entrée ou le conduit de sortie (5, 6) du boîtier (1),
**caractérisé en ce que** l'axe de filtre (10 ; 210 ; 310) présente au moins un espace de logement (14 ; 214 ; 314) creux, qui est formé par un axe de filtre (10 ; 210) réalisé en partie sous la forme d'un tube et qui peut être fermé par un couvercle (16 ; 216 ; 316) côté frontal, et **en ce que** plusieurs éléments filtrants (25 ; 225 ; 325) dotés d'un élément de répartition central (20 ; 220 ; 320) sont liés pour former une cartouche filtrante (30 ; 230 ; 330) pouvant être insérée dans l'espace de logement (14 ; 224 ; 314).

2. Dispositif de filtre (100) selon la revendication 1, **caractérisé en ce qu'**une première ouverture de passage (12) de l'axe de filtre (10) mène par l'intermédiaire d'un premier conduit de coulée (12) et par l'intermédiaire d'une première ouverture de sortie (23) dans l'élément de répartition central (20) dans l'espace de logement (14), et **en ce qu'**un deuxième conduit de coulée (21) s'étend depuis une deuxième ouverture de passage (11) de l'axe de filtre (10) dans l'élément de répartition central (20) jusqu'à plusieurs ouvertures de sortie (24) dans l'élément de répartition central, devant lesquelles est respectivement disposé un élément filtrant (25).

3. Dispositif de filtre (100) selon la revendication 2, **caractérisé en ce que** les éléments filtrants sont formés par des filtres à bougies (25).

4. Dispositif de filtre (100) selon la revendication 3, **caractérisé en ce que** les filtres à bougies (25) s'étendent de manière parallèle par rapport à l'axe longitudinal de l'axe de filtre (10) et sont installés par leur côté ouvert au niveau d'ouvertures (24) au niveau d'un côté frontal de l'élément de répartition central (20).

5. Dispositif de filtre (100' ; 100") selon la revendication 1, **caractérisé en ce qu'**une première ouverture de passage (212 ; 312) de l'axe de filtre (210 ; 310) mène par l'intermédiaire au moins d'un premier conduit de coulée (222 ; 322) et par l'intermédiaire au moins d'une première ouverture de sortie (23) dans l'élément de répartition central (20) dans l'espace de logement (14), et **en ce qu'**un deuxième conduit de coulée passe d'au moins une deuxième ouverture de passage de l'axe de filtre (210 ; 310) dans l'élément de répartition central (220 ; 320) jusqu'à au moins un tube de répartition (227 ; 327) dépassant dans l'espace de logement (214 ; 314) et doté de plusieurs ouvertures de sortie (327.1), au niveau duquel tube de répartition (227 ; 327)) se raccorde respectivement au moins un élément filtrant (225 ; 325).

6. Dispositif de filtre (100') selon la revendication 5, **caractérisé en ce que** les éléments filtrants sont formés par des filtres à bougies (225) qui sont placés respectivement au niveau d'une ouverture de sortie du tube de répartition (227).

7. Dispositif de filtre (100') selon la revendication 6, **caractérisé en ce que** le tube de répartition (227) est disposé de manière centrale au niveau de l'élément de répartition central (220), et **en ce que** les filtres à bougies (225) sont orientés de manière radiale.

8. Dispositif de filtre (100") selon la revendication 5, **caractérisé en ce que** les éléments filtrants sont formés par des ronds de filtre (325.1, ..., 325.10) creux, en forme de disque, lesquels sont alignés le long du tube de répartition et entourent le tube de répartition (327) au moins dans la zone de ses ouvertures de sortie (327.1).

9. Dispositif de filtre (100 ; 100' ; 100") selon au moins l'une quelconque des revendications 1 à 8, **caractérisé en ce que** respectivement au moins une cartouche filtrante (30 ; 230 ; 330) est disposée au niveau des deux côtés frontaux de l'élément de répartition central (20 ; 220 ; 320), et **en ce que** l'élément de répartition central (20 ; 220 ; 320) divise l'espace de logement (14 ; 214 ; 314) en deux chambres.

10. Dispositif de filtre (100 ; 100' ; 100") selon au moins l'une quelconque des revendications 1 à 9, **caractérisé en ce que** la première ouverture de passage (12) dans l'axe de filtre (10 ; 210 ; 310) est reliée par l'intermédiaire d'un premier conduit de coulée (22 ; 222, 322) à au moins une ouverture de sortie (23 ; 223 ; 323) ménagée côté frontal dans l'élément de répartition central (20 ; 220 ; 320).

11. Dispositif de filtre (100 ; 100' ; 100") selon au moins l'une quelconque des revendications 1 à 10, **caractérisé en ce qu'**au moins une tige ou un tube (27 ; 227 ; 327) s'étend de l'élément de répartition central (21) jusque dans le couvercle (16 ; 216 ; 316).

12. Dispositif de filtre (100 ; 100' ; 100") selon la revendication 11, **caractérisé en ce que** la tige ou le tube (27 ; 227 ; 327) est disposé(e) sur l'axe central de la cartouche filtrante (30 ; 230 ; 330), et **en ce que** l'ouverture/les ouvertures de sortie (23 ; 223) est/sont disposée(s) de manière excentrique dans l'élément de répartition central (20 ; 220 ; 320).

13. Dispositif de filtre (100 ; 100' ; 100") selon au moins l'une quelconque des revendications 1 à 12, **caractérisé en ce que** des parties faisant saillie et des parties en retrait (28) s'enchevêtrant par complémentarité de forme sont réalisées au niveau de la périphérie extérieure de l'élément de répartition central (20 ; 220 ; 320) et au niveau de la périphérie intérieure de l'espace de logement (14 ; 214 ; 314).

14. Dispositif de filtre (100 ; 100' ; ; 100") selon au moins l'une quelconque des revendications 1 à 12, **caractérisé en ce qu'**une arête d'appui (29 ; 229) est réalisée entre la périphérie extérieure de l'élément de répartition central (20 ; 220 ; 320) et la périphérie intérieure de l'espace de logement (14 ; 214 ; 314).
